## Europäisches Patentamt
## European Patent Office
## Office européen des brevets

(11) Veröffentlichungsnummer: **0 117 901**

**A2**

(12) # EUROPÄISCHE PATENTANMELDUNG

(21) Anmeldenummer: **83111325.3**

(22) Anmeldetag: **12.11.83**

(51) Int. Cl.³: **B 62 B 13/10**
**B 62 B 13/14**

(30) Priorität: **31.12.82 DE 8236926 U**

(43) Veröffentlichungstag der Anmeldung:
**12.09.84 Patentblatt 84/37**

(84) Benannte Vertragsstaaten:
**AT CH DE LI**

(71) Anmelder: **Schulte, Herbert**
**Jansenkathweg 3**
**D-4236 Hamminkeln-Mehrhoog(DE)**

(72) Erfinder: **Schulte, Herbert**
**Jansenkathweg 3**
**D-4236 Hamminkeln-Mehrhoog(DE)**

(54) **Schlitten.**

(57) Die Patentanmeldung betrifft einen Schlitten mit zwei Hauptkufen und zwei Lenkkufen (3,4), mit einem auf den Kufen abgestützten Rahmen, wobei die Lenkkufen jeweils mit einer nach oben und hinten geneigten, um ihre Längsachse drehbare, an ein Winkelgetriebe (14,15) angeschlossene Steuersäule (10,11) gekoppelt sind. Die Winkelgetriebe sind über ein Ausgleichsgetriebe (20,21,22) miteinander verbunden.

Bei dieser Anordnung können die beiden Lenkkufen nicht nur gleichsinnig (zum Lenken) sondern auch gegensinnig (zum Bremsen) bewegt werden.

Zum Lenken des Schlittens wird die Steuerwelle (23) mit Hilfe der Lenkgabel um ihre Achse verdreht. Dabei werden entsprechend der getrieblichen Kopplung die beiden Lenkkufen (3,4) gleichsinnig verschwenkt, wobei wegen der Schrägstellung der Steuersäulen (10,11) die Lenkkufen auch gegen die Horizontale gekippt werden. Dies verbessert die Steuerwirkung.

Zum Bremsen wird die Steuerwelle (23) in Fahrtrichtung nach vorn gedrückt. Entsprechend der getrieblichen Kopplung werden nunmehr die beiden Lenkkufen gegensinnig verschwenkt. Auch dabei kippen die Lenkkufen gegen die Horizontale, so daß die Wirkung eines "Schneepflugs" eintritt und der Schlitten gebremst wird.

EP 0 117 901 A2

Masc
**4236 Ha**̶̶̶̶̶̶̶̶̶̶̶̶̶̶̶̶̶̶̶̶̶̶
Jansenkathweg **3**
Tel.: **0 28 57 / 436**

Herbert Schulte, Jansenkathweg, 4231 Hamminkeln-Mehrhoog

---

Schlitten

Die Erfindung betrifft einen Schlitten mit zwei Hauptkufen
und wenigstens einer Lenkkufe, mit einem ggf. federnd
auf den Kufen abgestützten Rahmen und einem darauf
angeordneten Sitz, wobei an die Lenkkufe eine nach
oben und hinten geneigte, um ihre Längsachse drehbare
und am Rahmen gelagerte Steuersäule angeschlossen
ist.

Schlitten sind in verschiedenen Ausführungsformen
bekannt. Lenkbare Schlitten besitzen wenigstens eine
Lenkkufe, die über eine Steuersäule mit einem Lenkrad
oder einer Lenkstange in Verbindung steht. Es gibt
Schlitten, bei denen die Steuersäule vertikal angeordnet
ist. Bei einer anderen bekannten Ausführung (DE-GM
76 17 545) ist die Steuersäule nach oben und hinten
schräg gestellt. Dadurch wird erreicht, daß bei einem
Lenkausschlag der Lenkkufe diese sich nicht nur schräg
zur Fahrtrichtung einstellt sondern nach Maßgabe des
Lenkausschlages auch kippt, wodurch die Steuerwirkung
verbessert wird, weil die Lenkkufe sich dann auch
seitlich gegen den Schnee abstützen kann.

Deutsche Bank AG Krefeld 103/1525 BLZ 32070080 · Sparkasse Krefeld 305722 BLZ 32050000 · Postscheck essen 4055-431 BLZ 36010043

Problematisch ist das Abbremsen eines Schlittens.
Dazu besitzen manche Schlitten eine gesonderte Bremseinrichtung, zu deren Betätigung allerdings ein gesonderter
Bremser erforderlich ist.

Aufgabe der Erfindung ist es, einen Schlitten der
eingangs genannten Gattung so zu verbessern, daß der
Schlittenführer sowohl lenken als auch bremsen kann.

Diese Aufgabe wird dadurch gelöst, daß zwei Lenkkufen
vorgesehen sind, deren Steuersäulen jeweils an Winkelgetriebe angeschlossen sind und daß die Winkelgetriebe
über ein Ausgleichsgetriebe miteinander gekoppelt
sind.

Bei diesem Schlitten können die beiden Lenkkufen nicht
nur gleichsinnig (zum Lenken) sondern auch gegensinnig
(zum Bremsen) bewegt werden. Das ermöglicht das Ausgleichsgetriebe, das entsprechend betätigt werden
kann. Werden die beiden Lenkkufen zum Lenken des
Schlittens gleichsinnig bewegt, dann führen sie nach
Maßgabe der Größe des Lenkausschlages auch eine gleichsinnige Kippbewegung aus, so daß durch die dann entstehende Schrägstellung der Lenkkufen die Steuerkräfte
vergrößert werden. Werden die beiden Lenkkufen zum
Bremsen gegensinnig bewegt, dann führen sie gleichzeitig
eine gegensinnige Kippbewegung aus, so daß sie im
Ergebnis eine als "Schneepflug" bekannte Stellung
einnehmen. Das läßt sich auch erreichen, wenn die
Winkelgetriebe von zugeordneten Lenkhebeln betätigt
werden.

Zweckmäßig können die Winkelgetriebe am Rahmen gelagerte
Kegelradgetriebe sein. Solche Kegelradgetriebe sind
robust und halten auch den beim Schlittenfahren auftretenden Beanspruchungen Stand. Insbesondere können die Kegelradgetriebe ein Übersetzungsverhältnis von 1:1 besitzen.

Das Ausgleichsgetriebe kann ein Differential mit wenigstens einem Ausgleichsrad und zwei damit in Eingriff stehenden Tellerrädern sein, wobei die Tellerräder über zugeordnete Wellen an die Winkelgetriebe angeschlossen sind und auf den Wellen das Gehäuse des Differentials gelagert ist, während das Ausgleichsrad über eine Steuerwelle mit einem Lenkrad oder einer Lenkgabel verbunden ist. Dieses Ausgleichsgetriebe wird zweckmäßig vor dem Sitz des Schlittenführers so angeordnet, daß der Schlittenführer die Steuersäule des Ausgleichsrades nicht nur um ihre Achse verdrehen kann (Lenken) sondern auch das Gehäuse des Ausgleichsgetriebes insgesamt um die zu den Winkelgetrieben führenden Wellen verschwenken kann (Bremsen). Auch das Differential sollte ein Übersetzungsverhältnis 1:1 besitzen.

Um die beim Lenken und/oder Bremsen auftretenden Kräfte aufzufangen, können die Wellen zwischen Ausgleichsgetriebe und Winkelgetriebe am Rahmen gelagert sein.

Im folgenden wird ein in der Zeichnung dargestelltes Ausführungsbeispiel der Erfindung erläutert; es zeigen:

Fig. 1 die Seitenansicht eines Schlittens,

Fig. 2 eine Draufsicht auf den Gegenstand nach Fig. 1,

Fig. 3 eine Vorderansicht auf den Gegenstand nach
    Fig. 1,

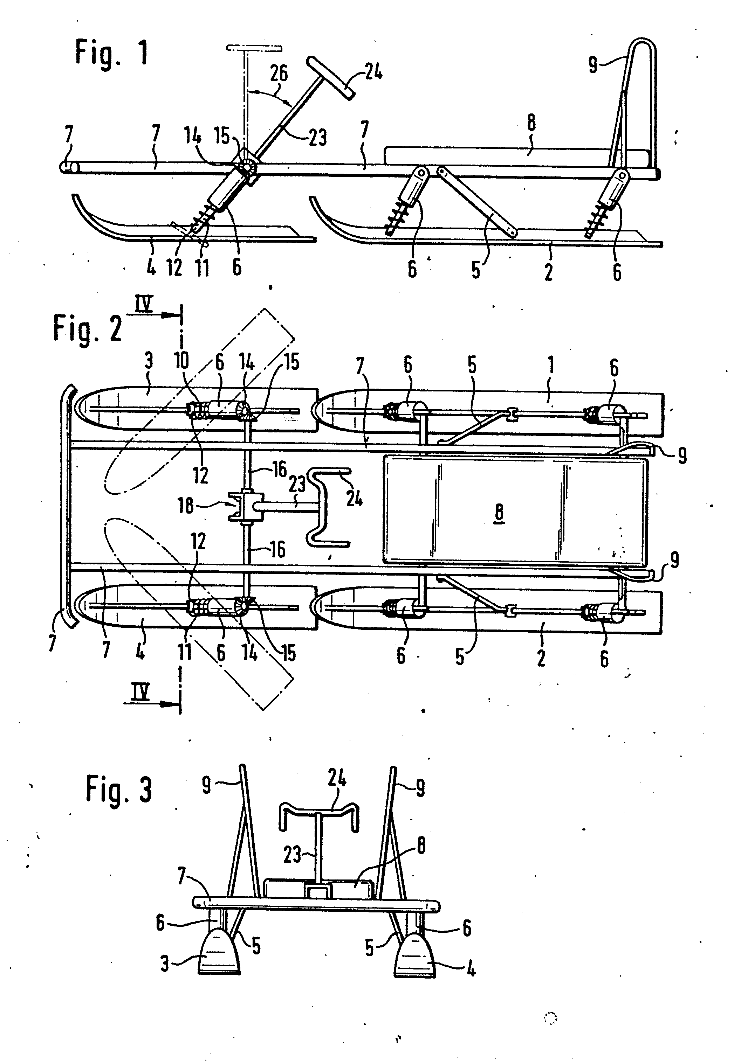

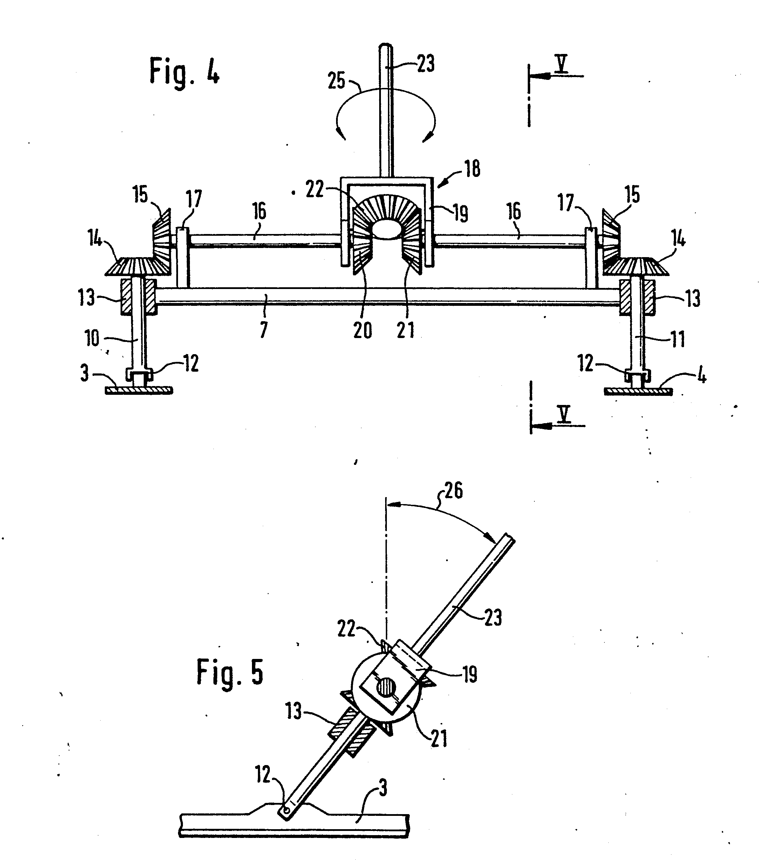

Fig. 4 teilweise einen Schnitt in Richtung IV-IV durch
den Gegenstand nach Fig. 2,

Fig. 5 einen Schnitt in Richtung V-V durch den Gegenstand
nach Fig. 4.

Der dargestellte Schlitten besitzt zwei Hauptkufen
1,2 und zwei Lenkkufen 3,4. Hauptkufen und Lenkkufen
jeder Seite sind in Fahrtrichtung hintereinander angeordnet. Im übrigen sind die Hauptkufen 1,2 und die Lenkkufen 3,4 jeweils parallel zueinander angeordnet.
Auf den Kufen ist über Lenker 5 sowie über Federn
und/oder Dämpfer 6 ein Rahmen 7 abgestützt, der bei
der dargestellten Ausführung ein Rohrrahmen ist, welcher
sich über die gesamte Länge des Schlittens erstreckt.
Auf den Rahmen 7 ist im Bereich der Hauptkufen 1,2
ein Sitz 8 angebracht. Am hinteren Ende des Rahmens 7
sind Haltegriffe 9 befestigt.

An jede Lenkkufe 3 bzw. 4 ist eine Steuersäule 10
bzw. 11 angeschlossen und zwar über ein Gelenk 12,
dessen Gelenkachse sich bei der dargestellten Betriebsstellung für Geradeausfahrt im wesentlichen horizontal
und quer zur Fahrtrichtung erstreckt.

Die Steuersäulen 10,11 erstrecken sich ausgehend von
den Lenkkufen 3,4 schräg nach oben und hinten. Sie
sind in zugeordneten Lagern 13 des Rahmens 7 um ihre
Achse drehbar gelagert. Am oberen Ende jeder Steuersäule
10 bzw. 11 befindet sich ein Kegelrad 14 eines Kegelradgetriebes, dessen anderes Kegelrad 15 am Ende einer
Welle 16 sitzt, die in einem auf dem Rahmen 7 abgestützten
Lager 17 drehbar gehalten ist und zu einem Differential 18
führt. Das Differential 18 besitzt ein Gehäuse 19,
welches auf den miteinander fluchtenden Wellen 16 von den beiden Kegelradgetrieben 14,15 gelagert ist.
Innerhalb des Gehäuses 19 enden die Wellen 16 an zugeordneten Tellerrädern 20 bzw. 21, die mit einem Ausgleichsrad 22 in Eingriff stehen. Das Ausgleichsrad 22
ist über eine Steuerwelle 23 mit einer Lenkgabel 24
verbunden.

Das Kegelradgetriebe 14,15 und das Differential 18
besitzen jeweils ein Übersetzungsverhältnis von 1:1.

Zum Lenken des Schlittens wird die Steuerwelle 23
mit Hilfe der Lenkgabel um ihre Achse verdreht, wie
das durch den Doppelpfeil 25 in Fig. 4 angedeutet
ist. Dabei werden entsprechend der getrieblichen Kopplung
die beiden Lenkkufen 3,4 gleichsinnig verschwenkt,
wobei wegen der Schrägstellung der Steuersäulen 10,11
die Lenkkufen 3,4 auch gegen die Horizontale gekippt
werden. Das verbessert die Steuerwirkung.

Zum Bremsen wird die Steuerwelle 23 in Richtung des
Doppelpfeils 26 (Fig.1,5) in Fahrtrichtung nach vorn
geschwenkt. Entsprechend der getrieblichen Kopplung
werden nunmehr die beiden Lenkkufen 3 und 4 gegensinnig
verschwenkt, wie das in Fig. 2 mit gestrichelten Linien
dargestellt ist. Auch dabei kippen die Lenkkufen 3,4
gegen die Horizontale, so daß die Wirkung eines "Schneepflugs" eintritt.

Beide Bewegungen der Steuerwelle 23 können einander
auch überlagert werden.

Ansprüche:

1. Schlitten mit zwei Hauptkufen und wenigstens einer
   Lenkkufe, mit einem ggf. federnd auf den Kufen
   abgestützten Rahmen und einem darauf angeordneten
   Sitz, wobei an die Lenkkufe eine nach oben und
   hinten geneigte, um ihre Längsachse drehbare und
   am Rahmen gelagerte Steuersäule angeschlossen ist,
   dadurch gekennzeichnet, daß zwei Lenkkufen (3,4)
   vorgesehen sind, deren Steuersäulen (10,11) jeweils
   an Winkelgetriebe (14,15) angeschlossen sind, und
   daß die Winkelgetriebe (14,15) über ein Ausgleichsgetriebe (18) miteinander gekoppelt sind oder über
   zugeordnete Lenkhebel betätigbar sind.

2. Schlitten nach Anspruch 1, dadurch gekennzeichnet,
   daß die Winkelgetriebe am Rahmen (7) gelagerte
   Kegelradgetriebe (14,15) sind.

3. Schlitten nach Anspruch 1 oder 2, dadurch gekennzeichnet, daß die Kegelradgetriebe (14,15) ein Übersetzungsverhältnis von 1:1 bsitzen.

4. Schlitten nach einem der Ansprüche 1 bis 3, dadurch
   gekennzeichnet, daß das Ausgleichsgetriebe ein
   Differential (18) mit wenigstens einem Ausgleichs-
   .rad (22) und zwei damit in Eingriff stehenden Tellerrädern (20,21) ist, wobei die Tellerräder (20,21)
über zugeordnete Wellen (16) an die Winkelgetriebe (14,
15) angeschlossen sind und auf den Wellen (16)
das Gehäuse (19) des Differentials (18) gelagert
ist, während das Ausgleichsrad (22) über eine Steuerwelle (23) mit einem Lenkrad oder einer Lenkgabel
verbunden ist.

5. Schlitten nach einem der Ansprüche 1 bis 4, dadurch
gekennzeichnet, daß das Differential (18) ein Übersetzungsverhältnis von 1:1 besitzt.

6. Schlitten nach einem der Ansprüche 1 bis 5, dadurch
gekennzeichnet, daß die Wellen (16) zwischen Ausgleichsgetriebe (18) und Winkelgetrieben (14,15)
am Rahmen (7) gelagert sind.

0117901

Fig. 1

Fig. 2

Fig. 3

0117901

Fig. 4

Fig. 5